# EUROPÄISCHE PATENTANMELDUNG

(11) **EP 3 616 858 A2**
(43) Veröffentlichungstag der Anmeldung: **04.03.2020**
(21) Anmeldenummer: 19188788.4
(22) Anmeldetag: 29.07.2019
(51) Int. Cl.: B25J 9/16

(54) **VERFAHREN UND VORRICHTUNG ZUR DOKUMENTATION EINES STATUS EINES AUTONOMEN ROBOTERS**

(30) Priorität: 29.08.2018 DE 102018121110
(71) Anmelder: Miele & Cie. KG, 33332 Gütersloh (DE)
(72) Erfinder: Krahmüller, Leif, 33719 Bielefeld (DE); Sellmann, Fabian, 33335 Gütersloh (DE); Maoro, Carina, 33729 Bielefeld (DE)

(57) **Zusammenfassung**

Die Erfindung betrifft ein Verfahren zur Dokumentation eines Status eines autonomen Roboters 102, wobei das Verfahren zunächst einen Schritt des Einlesens aufweist, bei dem zumindest ein Umfeldsignal 220, das ein Umfeld 108 des autonomen Roboters 102 repräsentiert, von einem optischen Sensor 106 eingelesen wird. Das Verfahren weist ferner einen Schritt des Erkennens auf, bei dem ein veränderter Status des autonomen Roboters 102 erkannt wird, wenn das zumindest eine Umfeldsignal 220 in einer Beziehung zu einem vordefinierten Referenzwert steht. Schließlich weist das Verfahren einen Schritt des Ausgebens auf, bei dem ein Signal 270 insbesondere ein Bildsignal an eine zentrale Einrichtung ausgegeben wird, um den veränderten Status des autonomen Roboters 102 zu melden.

## Beschreibung

Der hier vorgestellte Ansatz betrifft ein Verfahren und eine Vorrichtung zur Dokumentation eines Status eines autonomen Roboters gemäß den Hauptansprüchen.

Die EP2631730B1 offenbart einen Reinigungsroboter, der eine Sensoranordnung aufweist, welche zumindest eine Kameraeinheit aufweist. Unter Verwendung der Kameraeinheit können Aufnahmen einer Raumdecke gemacht werden.

Von diesem Stand der Technik ausgehend ist es die Aufgabe des hier vorgestellten Ansatzes, ein verbessertes Verfahren und eine verbesserte Vorrichtung zur Dokumentation eines Status eines autonomen Roboters zu schaffen.

Diese Aufgabe wird durch ein Verfahren und eine Vorrichtung zur Dokumentation eines Status eines autonomen Roboters mit den Merkmalen der Hauptansprüche gelöst. Vorteilhafte Ausgestaltungen und Weiterbildungen der Erfindung ergeben sich aus den nachfolgenden Unteransprüchen.

Die mit dem hier vorgestellten Ansatz einhergehenden Vorteile eines Verfahrens und einer Vorrichtung zur Dokumentation eines Status eines autonomen Roboters bestehen insbesondere darin, dass eine Manipulation und/oder Vandalismus an dem autonomen Roboter und/oder in einer Umgebung des autonomen Roboters mittels einer Bildaufnahme dokumentiert und an eine zentrale Einrichtung weitergeleitet werden kann, wodurch beispielsweise ein interner Fehlerzustand des autonomen Roboters besser bewertet und schneller behoben werden kann. Zusätzlich können hierbei unter Verwendung der Bildaufnahme auch vorteilhaft Rückschlüsse auf eine manipulierende und/oder vandalierende Person getroffen werden.

Es wird ein Verfahren zur Dokumentation eines Status eines autonomen Roboters vorgestellt, wobei das Verfahren die folgenden Schritte aufweist:
Einlesen zumindest eines Umfeldsignals, wobei das Umfeldsignal, das ein Umfeld des autonomen Roboters repräsentiert, von einem optischen Sensor eingelesen wird;
Erkennen eines veränderten Status des autonomen Roboters, wenn das zumindest eine Umfeldsignal in einer Beziehung zu einem vordefinierten Referenzwert steht; und
Ausgeben eines Signals insbesondere eines Bildsignals an eine zentrale Einrichtung, um den veränderten Status des autonomen Roboters zu melden.

Bei einem autonomen Roboter kann es sich beispielsweise um einen Serviceroboter handeln, der ausgebildet ist, Dienstleistungen für Menschen erbringen zu können. So kann es sich bei einem autonomen Roboter im Besonderen um einen Reinigungsroboter, beispielsweise zum Rasenmähen, Staubsaugen, Boden- und/oder Fensterwischen handeln. Ferner kann unter einem Serviceroboter auch ein Überwachungsroboter zur Überwachung eines öffentlichen Bereichs, wie beispielsweise einem Flughafen oder einem Bahnhof, verstanden werden. Unter Verwendung diverser Sensorikeinrichtungen kann der autonome Roboter beispielsweise auch zu einer Echtzeit-Umgebungsüberwachung im dreidimensionalen Raum befähigt sein und manipulierende und/oder vandalierende Personen in einer dynamischen Umgebung erkennen.

Unter einem Status kann beispielsweise ein physikalischer Zustand eines autonomen Roboters verstanden werden. Der Zustand des autonomen Roboters zu einem bestimmten Zeitpunkt kann hierbei die Gesamtheit aller Informationen, die zur vollständigen Beschreibung der momentanen Eigenschaften des autonomen Roboters erforderlich sind, umfassen. Der physikalische Zustand des autonomen Roboters kann insbesondere alle beobachtbaren Eigenschaften des autonomen Roboters festlegen und mittels eines Vergleichs mit einem vordefinierten Referenzwert bzw. Schwellwert einen physikalischen Zustand des autonomen Roboters eindeutig feststellen.

Bei einem optischen Sensor kann es sich um Sensoren handeln, die mittels Licht, innerhalb eines gewissen Spektrums, Objekte, Personen und/oder Infrastrukturmerkmale erfassen und damit Steuer-, Schalt und Regelfunktionen auslösen können. Hierbei kann es sich bei einem optischen Sensor im Besonderen um eine Kameraeinheit handeln, die beispielsweise an einem autonomen Roboter angeordnet ist und ferner dazu ausgebildet ist, fortlaufend Bildinformationen oder Bilder eines Umfelds des autonomen Roboters und der dort befindlichen Objekte, Personen und/oder Infrastrukturmerkmale zu erfassen und abzubilden. Darüber hinaus kann es sich bei dem optischen Sensor beispielsweise um eine Mono- oder eine Stereokamera oder eine 3D-Kamera handeln, die im sichtbaren und/oder Infrarotbereich Bilder aufnehmen kann.

Unter einem vordefinierten Referenzwert kann ein bekannter, korrekter, nicht-optischer Mess- und/oder Schwellwert für einen physikalischen Zustand eines autonomen Roboters verstanden werden, wobei der Referenzwert beispielsweise während einer Messsystemanalyse zu Vergleichszwecken genutzt oder aufgezeichnet werden kann. Der Referenzwert kann hierbei beispielsweise ferner in dem autonomen Roboter vorprogrammiert sein.

Bei einem Bildsignal kann es sich um ein elektrisches Signal eines optischen Sensors handeln, dass beispielsweise ein Abbild eines Umfelds eines autonomen Roboters repräsentiert.

Bei einer zentralen Einrichtung kann es sich beispielsweise um eine technische, militärische oder öffentliche Einrichtung handeln, an der Informationen von außen und innen zusammengeführt und ausgewertet werden. So kann es sich bei einer zentralen Einrichtung im Besonderen um eine verarbeitende Stelle, wie beispielsweise ein Kontrollzentrum und/oder ein Flottenmanagementsystem handeln.

Gemäß einer Ausführungsform kann im Schritt des Einlesens ferner ein physikalischer Parameter als weiteres Umfeldsignal eingelesen werden, wobei im Schritt des Erkennens der veränderte Status des autonomen Roboters erkannt wird, indem der physikalische Parameter mit dem vordefinierten Referenzwert verglichen wird. Eine solche Ausführungsform des hier vorgestellten Ansatzes bietet den Vorteil, dass durch eine prädiktive Regelung des autonomen Roboters mittels des physikalischen Parameters sowie des vordefinierten Referenzwertes die mannigfaltigen Anforderungen bei sich schnell verändernden Umfeldbedingungen und/oder internen Fehlerzuständen des autonomen Roboters erfüllt werden können.

Gemäß einer weiteren Ausführungsform kann im Schritt des Einlesens das zumindest eine Umfeldsignal von einem optischen Sensor des autonomen Roboters eingelesen werden, wobei der optische Sensor als eine Monokameraeinheit, eine Stereokameraeinheit und/oder eine 3D-Kameraeinheit ausgebildet ist. Eine solche Ausführungsform des hier vorgestellten Ansatzes bietet den Vorteil, dass unter Verwendung eines optischen Sensors, insbesondere einer fototechnischen Apparatur, wie beispielsweise einer Monokameraeinheit, einer Stereokameraeinheit und/oder einer 3D-Kameraeinheit, statische oder bewegte Bilder auf einem fotografischen Film oder elektronisch auf ein magnetisches Videoband oder digitales Speichermedium aufgezeichnet und/oder über eine Schnittstelle übermittelt werden können.

Ferner kann gemäß einer Ausführungsform im Schritt des Einlesens das zumindest eine Umfeldsignal und/oder das weitere Umfeldsignal mit einem Zeitstempel eingelesen werden, wobei im Schritt des Ausgebens der Zeitstempel mit ausgegeben wird. Der Zeitstempel kann hierbei beispielsweise einen Zeitpunkt einer Eingabe, Veränderung und/oder Speicherung des zumindest einen Umfeldsignals und/oder des weiteren Umfeldsignals repräsentieren. Eine solche Ausführungsform des hier vorgestellten Ansatzes bietet den Vorteil, dass unter Verwendung des Zeitstempels eine noch detailliertere Aussage über einen Status des autonomen Roboters getroffen werden kann.

In einer weiteren Ausführungsform des Verfahrens kann im Schritt des Einlesens der physikalische Parameter von einem Notausschalter des autonomen Roboters und/oder einem Sensor des autonomen Roboters zur Erfassung einer äußeren Gewalteinwirkung und/oder einem internen Fehlersensor des autonomen Roboters und/oder einem Absturzsensor des autonomen Roboters eingelesen werden. Eine solche Ausführungsform des hier vorgestellten Ansatzes bietet den Vorteil, dass unter Verwendung des physikalischen Parameters des autonomen Roboters ein aktueller interner Fehlerzustand des autonomen Roboters besser erkannt und schneller behoben werden kann.

Darüber hinaus kann gemäß einer Ausführungsform im Schritt des Erkennens bei einem erkannten veränderten Status des autonomen Roboters eine Gesichtserkennung durchgeführt werden, um eine Person zu erkennen, wobei im Schritt des Ausgebens eine Information über die erkannte Person ausgegeben wird. Eine solche Ausführungsform des hier vorgestellten Ansatzes bietet den Vorteil, dass spezifische Personenmerkmalen der erkannten Person aus den gesammelten Bilddaten extrahiert werden können. Anhand dieser spezifischen Personenmerkmale kann eine bestimmte Person eindeutig identifiziert werden. So kann mittels einer Bildaufnahme der Umgebung des autonomen Roboters ein Rückschluss auf eine manipulierende und/oder vandalierende Person gezogen werden.

Weiterhin kann gemäß einer Ausführungsform der Schritt des Ausgebens einer Information unterdrückt werden, wenn die erkannte Person als zur Vornahme von Handlungen am autonomen Roboter autorisiert erkannt wird. Hierbei kann ein vorgespeicherter biometrischer Faktor für die Authentifizierung einer Person eingesetzt werden. Eine solche Ausführungsform des hier vorgestellten Ansatzes bietet somit den Vorteil, dass ein Fehlalarm vermieden werden kann.

Gemäß einer Ausführungsform kann im Schritt des Ausgebens bei einem erkannten veränderten Status des autonomen Roboters ferner ein Warnsignal ausgegeben werden. Eine solche Ausführungsform des hier vorgestellten Ansatzes bietet den Vorteil, dass eine optische und/oder akustische Warnung bzw. eine Information zu einem Fehlerzustand des autonomen Roboters und/oder einer Manipulation und/oder Vandalismus am autonomen Roboter und/oder in einer Umgebung des autonomen Roboters schnell, einfach und effektiv an die zentrale Einrichtung übermittelt werden kann und/oder direkt an eine Umgebung des autonomen Roboter ausgegeben werden kann. Hierdurch kann eine Sicherheit in einem öffentlichen Raum, in dem sich der autonome Roboter beispielsweise aufhält und/oder einen Service leistet, erhöht werden.

Gemäß einer weiteren Ausführungsform können im Schritt des Erkennens aufgrund eines erkannten veränderten Status des autonomen Roboters eine Mehrzahl roboter-externer Überwachungssensoren, insbesondere Überwachungskameras, von dem autonomen Roboter und/oder der zentralen Einrichtung aktiviert werden eine Mehrzahl von weiteren Umfeldsignalen einzulesen. Eine solche Ausführungsform des hier vorgestellten Ansatzes bietet den Vorteil, dass Überwachungssensoren zur Beobachtung öffentlicher Bereiche verwendet werden können. Hierbei wird ein sich im Überwachungsbereich befindliches auffälliges Objekt, beispielsweise eine Person, von der Überwachungskamera aufgezeichnet. Die von den Überwachungskameras aufgezeichneten Bildsequenzen und/oder Videosequenzen können an eine zentrale Einheit, beispielsweise eine Überwachungszentrale, weitergeleitet und dort von einem Überwachungspersonal und/oder automatisiert ausgewertet werden. Hierbei kann mittels einer präventiven und repressiven Wirkung der Bild- und/oder Videoüberwachung eine nachhaltige Verbesserung der Sicherheitslage in einem Umfeld des autonomen Roboters erreicht werden.

Schließlich können, gemäß einer Ausführungsform, die im Schritt des Einlesens erfassten Umfeldsignale des autonomen Roboters und/oder die Mehrzahl von Umfeldsignalen von den externen Überwachungssensoren auf einem roboter-internen Speichereinheit gespeichert werden, wobei im Schritt des Ausgebens die zu dem Signal generierten Umfeldsignale an eine zentrale Einrichtung ausgegeben werden. Eine solche Ausführungsform des hier vorgestellten Ansatzes bietet den Vorteil, dass eventuell auftretende Manipulationsvorgänge an dem autonomen Roboter und/oder besondere Ereignisse in einem Umfeld des autonomen Roboters dokumentiert und an eine autorisierte Person und/oder eine zentrale Einrichtung, beispielsweise ein Kontrollzentrum und/oder ein Flottenmanagementsystem, weitergegeben werden. So kann der aktuelle Fehlerzustand des autonomen Roboters besser bewertet und folglich schnell und effizient behoben werden.

Der hier vorgestellte Ansatz schafft ferner eine Vorrichtung zur Dokumentation eines Status eines autonomen Roboters, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Es wird ein autonomer Roboter zum Ausführen einer Serviceleistung, insbesondere einer Reinigungsleistung, und eine genannte Vorrichtung zur Dokumentation eines Status eines autonomen Roboters vorgestellt. Dabei kann die Vorrichtung in einer Cloudplattform betreibbar sein. Die Cloudplattform kann hierbei der Vernetzung des autonomen Roboters und der Vorrichtung zum Ausgeben des Signals dienen. Eine solche Ausführungsform des hier vorgestellten Ansatzes bietet somit den Vorteil, dass eine Aufbereitung von Daten in einer externen Recheneinheit einen geringeren Rechenbedarf im autonomen Roboter selbst bedeutet und einen damit verbundenen geringeren Energieverbrauch oder die Möglichkeit, Ressourcen für andere Funktionen zu nutzen, ermöglicht. Außerdem verfügt die externe Recheneinheit über eine größere verfügbare Rechenleistung als ein roboter-interner Computer.

Auch wenn der beschriebene Ansatz anhand eines autonomen Roboters zum Ausführen einer Serviceleistung, insbesondere einer Reinigungsleistung, beschrieben wird, kann die hier beschriebene Vorrichtung und/oder das hier beschriebene Verfahren entsprechend im Zusammenhang mit einem gewerblichen oder professionellen autonomen Roboter, beispielsweise einem Überwachungsroboter für öffentliche Bereiche und/oder einem autonomen Roboter für den medizinischen Bereich, eingesetzt werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung einer Manipulationssituation zur Verwendung eines Verfahrens zur Dokumentation eines Status eines autonomen Roboters gemäß einem Ausführungsbeispiel;
- Figur 2: ein Blockschaltbild einer Vorrichtung zur Dokumentation eines Status eines autonomen Roboters gemäß einem Ausführungsbeispiel; und
- Figur 3: ein Ablaufdiagramm eines Ausführungsbeispiels eines Verfahrens zur Dokumentation eines Status eines autonomen Roboters gemäß einem Ausführungsbeispiel.

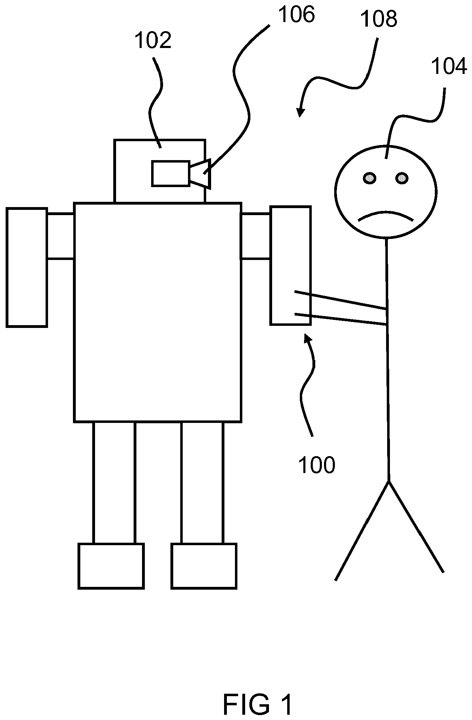

Figur 1 zeigt eine schematische Darstellung einer Manipulationssituation 100 zur Verwendung eines Verfahrens zur Dokumentation eines Status eines autonomen Roboters 102 gemäß einem Ausführungsbeispiel. Hierbei zeigt die Darstellung den autonomen Roboter 102, wobei eine unautorisierte Person 104 versucht, den autonomen Roboter 102 zu manipulieren. Gemäß einem Ausführungsbeispiel weist der autonome Roboter 102 zumindest einen optischen Sensor 106 oder eine Mehrzahl optischer Sensoren, beispielsweise Stereokameras, Mono-Kameras und/oder 3D-Kameras, zur Navigation auf. Neben der Navigation können unter Verwendung des optischen Sensors 106 auch Bildaufnahmen einer Umgebung 108 des autonomen Roboters 102 vorgenommen werden.

Autonome Roboter 102 kommen, insbesondere in öffentlichen Bereichen, häufig mit unterschiedlichsten Personengruppen in Kontakt. Hierbei kann die Gefahr bestehen, dass durch eine unautorisierte Person 104 und/oder eine unautorisierte Personengruppe eine Manipulation am autonomen Roboter 102, ein Diebstahl eines Transportguts des autonomen Roboters 102, eine Behinderung einer Funktionsausführung des autonomen Roboters 102 und/oder Vandalismus am autonomen Roboter 102 vorgenommen wird.

Im normalen Betrieb des autonomen Roboters 102 können Manipulationssituationen 100 und/oder besondere Ereignisse auftreten, welche von dem autonomen Roboter 102 überwacht und dokumentiert werden sollten, wie beispielsweise das Betätigen eines Notausschalters des autonomen Roboters 102, ein gewaltsames Öffnen von Transportbehältern des autonomen Roboters 102, ein Rütteln, Anheben oder gar Umstoßen des autonomen Roboters 102, ein Blockieren des autonomen Roboters 102, sodass er keinen Ausweg findet, das Auslösen eines Feueralarms des autonomen Roboters 102 und/oder das Auslösen eines Feueralarms in einer Umgebung 108 des autonomen Roboters 102, das Schließen einer Tür, insbesondere einer Feuerschutztür, ein interner Fehlerzustand des autonomen Roboters 102, wie beispielsweise ein Überstrom der Radgetriebeeinheiten und/oder das Auslösen eines Absturzsensors des autonomen Roboters 102 aufgrund einer erkannten Absturzkante.

All diese Manipulationsvorgänge 100 und/oder besonderen Ereignisse sollen dokumentiert und an eine autorisierte Person und/oder eine zentrale Einrichtung, beispielsweise ein Kontrollzentrum und/oder ein Flottenmanagementsystem, weitergegeben werden. So kann der aktuelle Fehlerzustand des autonomen Roboters 102 besser bewertet und folglich schnell und effizient behoben werden. Hierzu wird eine Ist-Aufnahme von Sensordaten, wie Bilddaten und/oder physikalische Zustandsdaten des autonomen Roboters 102, auf einer roboter-internen Speichereinheit und/oder auf einer externen Recheneinheit, beispielsweise einer Cloudplattform, zwischengespeichert. Insbesondere sollen hierbei Fotoaufnahmen von dem optischen Sensor 106 des autonomen Roboters 102 und/oder zumindest einem Überwachungssensor, beispielsweise einer Überwachungskamera in der Umgebung 108 des autonomen Roboters 102, gemacht werden, sodass bei einem auftretenden Diebstahl und/oder einer Manipulation 100 des autonomen Roboters 102 und/oder in einer Umgebung 108 des autonomen Roboters 102, die manipulierende Person 104 erkannt werden kann.

Nach der Erkennung eines der oben genannten Ereignisse wird mittels des optischen Sensors 106 ein Bild und/oder eine Mehrzahl von Bildern aufgenommen und diese gesammelt als Statusmeldung gespeichert bzw. an eine verarbeitende Stelle weitergegeben. Hierbei werden die aufgenommenen Bilder sowie die physikalischen Zustandsdaten des autonomen Roboters 102 mit einem Zeitstempel versehen und gespeichert, um eine noch detailliertere Aussage über den Zustand des autonomen Roboters 102 und/oder die Umgebung 108 des autonomen Roboters 102 treffen zu können.

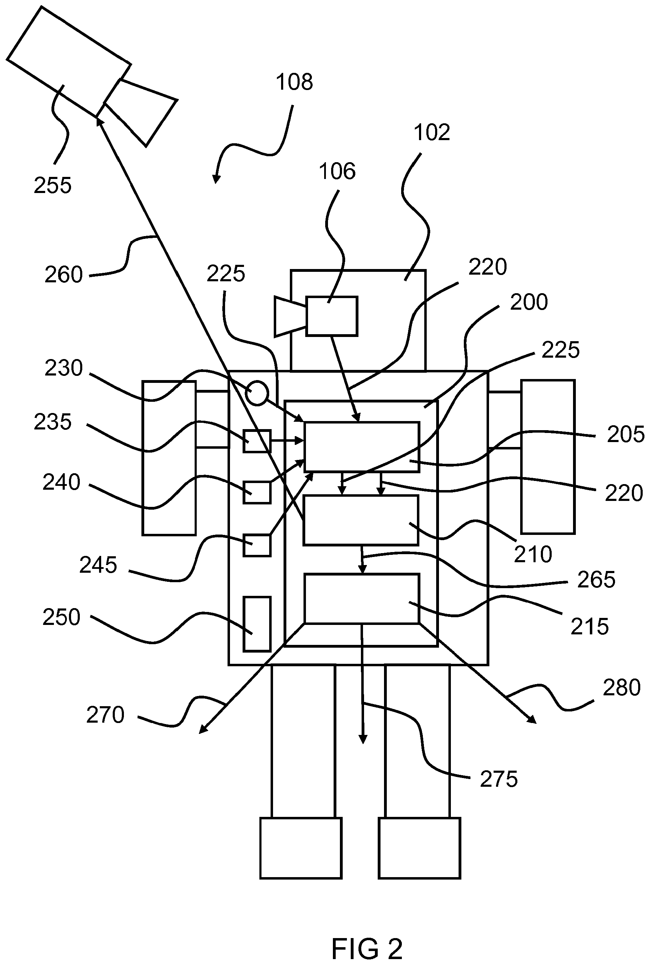

Figur 2 zeigt ein Blockschaltbild einer Vorrichtung 200 zur Dokumentation eines Status eines autonomen Roboters 102 gemäß einem Ausführungsbeispiel. Hierbei ist die Vorrichtung 200 beispielhaft auf dem autonomen Roboter 102, insbesondere einem Serviceroboter für Reinigungsaufgaben, angeordnet. Zusätzlich oder alternativ kann die Vorrichtung 200 auch auf einer externen Recheneinheit, beispielsweise einer Cloudplattform, angeordnet sein. Gemäß einem Ausführungsbeispiel weist der autonome Roboter 102 zumindest einen optischen Sensor 106 auf, wobei es sich bei dem optischen Sensor 106 beispielsweise um eine Monokameraeinheit, eine Stereokameraeinheit und/oder eine 3D-Kameraeinheit zur optischen-sensorischen Erfassung eines Umfelds 108 des autonomen Roboters 102 handelt.

Gemäß einem Ausführungsbeispiel weist die Vorrichtung 200 eine Einleseeinheit 205, eine Erkenneinheit 210 sowie eine Ausgabeeinheit 215 auf. Die Einleseeinheit 205 ist beispielhaft ausgebildet, zumindest ein Umfeldsignal 220 von dem optischen Sensor 106 einzulesen. Hierbei repräsentiert das zumindest eine Umfeldsignal 220 das Umfeld 108 des autonomen Roboters 102. Die Einleseeinheit 205 ist beispielhaft ferner ausgebildet, einen physikalischen Parameter 225 des autonomen Roboters 102 als weiteres Umfeldsignal 225 einzulesen. Gemäß einem Ausführungsbeispiel ist die Einleseeinheit 205 hierbei ausgebildet, den physikalischen Parameter 225 von einem Notausschalter 230 des autonomen Roboters 102 und/oder einem Sensor 235 des autonomen Roboters 102 zur Erfassung einer äußeren Gewalteinwirkung auf den autonomen Roboter 102 und/oder einem internen Fehlersensor 240 des autonomen Roboters 102 und/oder einem Absturzsensor 245 des autonomen Roboters 102 einzulesen. Darüber hinaus ist die Einleseeinheit 205 ausgebildet, das zumindest eine Umfeldsignal 220 und/oder das weitere Umfeldsignal 225 mit einem Zeitstempel einzulesen, wobei der Zeitstempel einen Zeitpunkt einer Eingabe, Veränderung und/oder Speicherung des zumindest einen Umfeldsignals 220 und/oder des weiteren Umfeldsignals 225 repräsentiert.

Optional kann der autonome Roboter 102 eine roboter-internen Speichereinheit 250 aufweisen, wobei die roboter-internen Speichereinheit 250 ausgebildet ist, das zumindest eine Umfeldsignal 220 und/oder das weitere Umfeldsignal 225 zwischenzuspeichern.

Gemäß einem Ausführungsbeispiel ist die Erkenneinheit 210 ausgebildet, einen veränderten Status des autonomen Roboters 102 zu erkennen, wenn das zumindest eine Umfeldsignal 220 und/oder das weitere Umfeldsignal 225 in einer Beziehung zu einem vordefinierten Referenzwert steht. Hierbei ist die Erkenneinheit 210 weiterhin ausgebildet, das zumindest eine optische Umfeldsignal 220 und/oder den physikalischen Parameter 225 mit dem vordefinierten Referenzwert zu vergleichen. Darüber hinaus ist die Erkenneinheit 210 gemäß einem Ausführungsbeispiel ausgebildet, bei einem erkannten veränderten Status des autonomen Roboters 102 eine Gesichtserkennung durchzuführen. Hierfür kann auf der Erkenneinheit 210 beispielhaft ein maschinelles Lernverfahren und/oder ein neuronales Netzwerk zur Lokalisation eines Gesichts in einem von dem optischen Sensor 106 aufgenommen Bild und der Zuordnung des Gesichts zu einer bestimmten Person vorprogrammiert sein. Die dahinter stehenden Algorithmen werden mit Hilfe von großen Datensätzen, also sehr vielen Bildern, trainiert. Das maschinelle Lernverfahren nutzt hierbei beispielhaft ein mehrschichtiges neuronales Netzwerk, das seine Parameter in der Trainingsphase so lange anpasst, bis das Gesicht einer Person zuverlässig erkannt und diese als autorisiert gespeichert werden kann.

Optional kann die Erkenneinheit 210 ausgebildet sein, aufgrund eines erkannten veränderten Status des autonomen Roboters 102, eine Mehrzahl externer Überwachungssensoren, beispielhaft zumindest eine Überwachungskamera 255, die in dem Umfeld 108 des autonomen Roboters 102 angeordnet ist, unter Verwendung eines Aktivierungssignals 260 zu aktivieren, sodass die Überwachungskamera 255 eine Mehrzahl von Umfeldsignalen einliest. Hierbei können auch diese Mehrzahl von Umfeldsignalen optional auf der roboter-internen Speichereinheit 250 des autonomen Roboters 102 zwischengespeichert werden.

Gemäß einem Ausführungsbeispiel ist die Ausgabeeinheit 215 ausgebildet, unter Verwendung eines von der Erkenneinheit 210 bereitgestellten Statussignals 265, das einen erkannten veränderten Status des autonomen Roboters 102 repräsentiert, ein Bildsignal 270 an die zentrale Einrichtung auszugeben, um den veränderten Status des autonomen Roboters 102 zu melden. Hierbei kann das Bildsignal 270 ein elektrisches Signal des optischen Sensors 106 repräsentieren, dass beispielsweise ein Abbild des Umfelds 108 des autonomen Roboters 102 repräsentiert. Gemäß einem Ausführungsbeispiel ist die Ausgabeeinheit 215 ferner ausgebildet, bei einem erkannten veränderten Status des autonomen Roboters 102 ein Warnsignal 275 auszugeben. Hierbei kann die Ausgabe des Warnsignals 275 beispielsweise an die zentrale Einrichtung und/oder optisch und/oder akustisch an das direkte Umfeld 108 des autonomen Roboters 102 erfolgen. Die Ausgabeeinheit 215 ist schließlich ausgebildet eine Information über eine erkannte Person, die sich in dem Umfeld 108 des autonomen Roboters 102 aufhält und möglicherweise den veränderten Status des autonomen Roboters 102 zu verschulden hat, in Form eines Informationssignals 280 an die zentrale Einrichtung auszugeben. Hierbei wird eine Ausgabe des Informationssignals 280 an die zentrale Einrichtung jedoch unterdrückt, wenn die erkannte Person von der Erkenneinheit 210 als autorisiert erkannt wird, wobei ein erkanntes Gesicht der Person als biometrischer Faktor für die Authentifizierung eingesetzt werden kann.

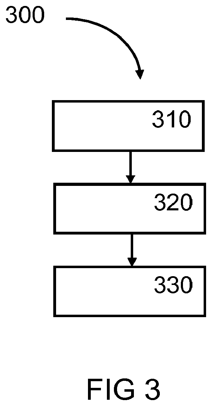

Figur 3 zeigt ein Ablaufdiagramm eines Ausführungsbeispiels eines Verfahrens 300 zur Dokumentation eines Status eines autonomen Roboters gemäß einem Ausführungsbeispiel. Das Verfahren 300 kann beispielsweise unter Verwendung der anhand von Figur 1 beschriebenen Vorrichtung zur Dokumentation eines Status eines autonomen Roboters ausgeführt werden.

Das Verfahren 300 weist zunächst einen Schritt 310 auf, bei dem zumindest ein Umfeldsignal, das ein Umfeld des autonomen Roboters repräsentiert, von einem optischen Sensor eingelesen wird. Das Verfahren 300 weist im Folgenden einen Schritt 320 auf, bei dem ein veränderter Status des autonomen Roboters erkannt wird, wenn das zumindest eine Umfeldsignal in einer Beziehung zu einem vordefinierten Referenzwert steht. Schließlich weist das Verfahren 300 einen Schritt 330 auf, bei dem ein Bildsignal an eine zentrale Einrichtung ausgegeben wird, um den veränderten Status des autonomen Roboters zu melden.

## Patentansprüche

1. Verfahren (300) zur Dokumentation eines Status eines autonomen Roboters (102), wobei das Verfahren (300) die folgenden Schritte aufweist:
Einlesen (310) zumindest eines Umfeldsignals (220), wobei das Umfeldsignal (220), das ein Umfeld (108) des autonomen Roboters (102) repräsentiert, von einem optischen Sensor (106) eingelesen wird;
Erkennen (320) eines veränderten Status des autonomen Roboters (102), wenn das zumindest eine Umfeldsignal (220) in einer Beziehung zu einem vordefinierten Referenzwert steht; und
Ausgeben (330) eines Signals (270) insbesondere eines Bildsignals an eine zentrale Einrichtung, um den veränderten Status des autonomen Roboters (102) zu melden.

2. Verfahren (300) gemäß Anspruch 1, bei dem im Schritt (310) des Einlesens ferner ein physikalischer Parameter (225) als weiteres Umfeldsignal (225) eingelesen wird, wobei im Schritt (320) des Erkennens der veränderte Status des autonomen Roboters (102) erkannt wird, indem der physikalische Parameter (225) mit dem vordefinierten Referenzwert verglichen wird.

3. Verfahren (300) gemäß einem der vorangegangenen Ansprüche, bei dem im Schritt (310) des Einlesens das zumindest eine Umfeldsignal (220) von einem optischen Sensor (106) des autonomen Roboters (102) eingelesen wird, wobei der optische Sensor (106) als eine Monokameraeinheit, eine Stereokameraeinheit und/oder eine 3D-Kameraeinheit ausgebildet ist.

4. Verfahren (300) gemäß einem der vorangegangenen Ansprüche, bei dem im Schritt (310) des Einlesens das zumindest eine Umfeldsignal (220) und/oder das weitere Umfeldsignal (225) mit einem Zeitstempel eingelesen wird, wobei im Schritt (330) des Ausgebens der Zeitstempel mit ausgegeben wird.

5. Verfahren (300) gemäß einem der vorangegangenen Ansprüche, bei dem im Schritt (310) des Einlesens der physikalische Parameter (225) von einem Notausschalter (230) des autonomen Roboters (102) und/oder einem Sensor (235) des autonomen Roboters (102) zur Erfassung einer äußeren Gewalteinwirkung und/oder einem internen Fehlersensor (240) des autonomen Roboters (102) und/oder einem Absturzsensor (245) des autonomen Roboters (102) eingelesen wird.

6. Verfahren (300) gemäß einem der vorangegangenen Ansprüche, bei dem im Schritt (320) des Erkennens bei einem erkannten veränderten Status des autonomen Roboters (102) eine Gesichtserkennung durchgeführt wird, um eine Person (104) zu erkennen, wobei im Schritt (330) des Ausgebens eine Information über die erkannte Person (104) ausgegeben wird.

7. Verfahren (300) gemäß Anspruch 6, wobei der Schritt (330) des Ausgebens einer Information unterdrückt wird, wenn die erkannte Person (104) als zur Vornahme von Handlungen am autonomen Roboter (102) autorisiert erkannt wird.

8. Verfahren (300) gemäß einem der vorangegangenen Ansprüche, bei dem im Schritt (330) des Ausgebens bei einem erkannten veränderten Status des autonomen Roboters (102) ferner ein Warnsignal (275) ausgegeben wird.

9. Verfahren (300) gemäß einem der vorangegangenen Ansprüche, bei dem im Schritt (320) des Erkennens aufgrund eines erkannten veränderten Status des autonomen Roboters (102) eine Mehrzahl roboter-externer Überwachungssensoren (255), insbesondere Überwachungskameras (255), von dem autonomen Roboter (102) und/oder der zentralen Einrichtung aktiviert werden eine Mehrzahl von weiteren Umfeldsignalen einzulesen.

10. Verfahren (300) gemäß einem der vorangegangenen Ansprüche, bei dem die im Schritt (310) des Einlesens erfassten Umfeldsignale (220, 225) des autonomen Roboters (102) und/oder die Mehrzahl von Umfeldsignalen von externen Überwachungssensoren (255) auf einer roboter-internen Speichereinheit (250) gespeichert werden, wobei im Schritt (330) des Ausgebens die zu dem Signal (270) generierten Umfeldsignale (220, 225) an eine zentrale Einrichtung ausgegeben werden.

11. Vorrichtung (200), die ausgebildet ist, um die Schritte (310, 320, 330) des Verfahrens (300) gemäß einem der vorangegangenen Ansprüche auszuführen und/oder anzusteuern.

12. Autonomer Roboter (102) zum Ausführen einer Serviceleistung, insbesondere einer Reinigungsleistung, wobei der autonome Roboter (102) eine Vorrichtung (200) gemäß Anspruch 11 aufweist.

13. Autonomer Roboter (102) gemäß Anspruch 12, wobei die Vorrichtung (200) in einer Cloudplattform betreibbar ist und wobei die Cloudplattform der Vernetzung des autonomen Roboters (102) und der Vorrichtung (200) zum Ausgeben des Signals (270) dient.

14. Computer-Programmprodukt mit Programmcode zur Durchführung des Verfahrens (300) nach einem der vorangegangenen Ansprüche, wenn das Computer-Programmprodukt auf einer Vorrichtung (200) ausgeführt wird.
